# EUROPEAN PATENT APPLICATION

(11) **EP 2 574 693 A1**
(43) Date of publication of application: **03.04.2013**
(21) Application number: 11007829.2
(22) Date of filing: 27.09.2011
(51) Int. Cl.: D04H 1/64, D04H 1/4218, D04H 1/413, D04H 1/4209, E04B 1/76

(54) **Method of producing an insulating element made of mineral fibres and insulating element made of mineral fibres**

(71) Applicant: Rockwool International A/S, 2640 Hedehusene (DK)
(72) Inventor: Schwark, Martin, 47242 Bottrop (DE)
(74) Representative: Stenger, Watzke & Ring

(57) **Abstract**

The invention relates to a method for producing an insulating element made of mineral fibres, especially stone wool fibres, whereby a melt of an inorganic silicate material is fiberized to mineral fibres which are collected in a collecting chamber and deposited on a conveyor as a mineral fibre web. Furthermore, the invention is related to an insulating element made of mineral fibres especially stone wool fibres in form of a web, a pipe shell or a board having two main surfaces, which are connected by said faces to each other to provide a method to produce an insulating element which is easy to handle, inexpensive and from which results insulating elements with different properties to be used in different areas of the building industry shreds of a disintegrated composite comprising aerogel material, preferably together with mineral fibres and/or binder, are added especially sprayed on and/or blown up to the mineral fibre web and/or to the components of the fibre web.

## Description

The invention relates to a method for producing an insulating element made of mineral fibres, especially stone wool fibres, whereby a melt of an inorganic silicate material is fiberized to mineral fibres which are collected in a collecting chamber and deposited on a conveyor as a mineral fibre web. Furthermore, the invention is related to an insulating element made of mineral fibres especially stone wool fibres in form of a web, a pipe shell or a board having two main surfaces, which are connected by said faces to each other.

Insulating elements made of mineral fibres are well known since decades. These insulating elements are usually produced by melting a silicate material which melt is fiberized in a fiberization device and the arising fibres are collected in a collecting chamber and if necessary are combined with at least one organic binder. The fibres are collected to form an endless web on a conveyor. The web is after running through different mechanical working stations cured in a curing oven. Finally the cured web can be shortened to boards.

Furthermore, it is well known to use aerogel particulate material in such a production process in combination with mineral fibres and binders to manufacture an aerogel-containing composite. For example WO 2011/012710 describes a method for manufacturing an aerogel-containing composite, said method comprising the steps of providing a starting material containing mineral fibres, an aerogel particulate material and a binder, whereby the fibres are suspended in a primary air flow together with the aerogel particulate material, thereby mixing the suspended aerogel particulate material with the suspended fibres, mixing the binder with the mineral fibres and/or aerogel particulate material before, during or after mixing of the fibres with the aerogel particulate material and collecting the mixture of mineral fibres, aerogel particulate material and binder and pressing and curing the mixture to provide a consolidated composite with a certain density.

The resulting composite which is also described in the before mentioned document has good insulating and damping properties so that it can be used in nearly every area of heat and/or sound insulation especially in the building industry.

It is an object of the invention to provide a method to produce an insulating element which is easy to handle, inexpensive and from which results insulating elements with different properties to be used in different areas of the building industry.

Furthermore, it is an object of the invention to provide an insulating element having different properties for the use in the building industry especially good heat and/or sound insulation properties and which can be easily produced without changing of the equipment to produce such elements.

According to the invention this object is achieved with a method for producing an insulating element made of mineral fibres, especially stone wool fibres, whereby a melt of an inorganic silicate material is fiberized to mineral fibres which are collected in a collecting chamber and deposited on a conveyor as a mineral fibre web whereby adding shreds of a disintegrated composite comprising aerogel material, preferably together with mineral fibres and/or binder, especially sprayed on and/or blown up to the mineral fibre web and/or to the components of the fibre web.

According to the invention a composite of at least aerogel material is disintegrated and the resulting fibres are added to the mineral fibres in the collecting chamber and/or to a fibre web being produced from the mineral fibres which arise from the usually used fiberization as described before. The shreds arising from the disintegrated composite of the aerogel material can be mixed with mineral fibres and/or binder. Furthermore, a composite of aerogel material and mineral fibres and/or binder can be used in the method according to the invention. Preferably insulation webs of aerogel or insulation webs of silica-aerogel for high temperature purposes are used in the method according to the invention. These webs can be enforced by glass fleece, such as the commercially available products Pyrogel XT or Spaceloft, both made by Aspen Aerogels, Inc. The composite is disintegrated so that fibres, shreds or tufts of an average size result which average size is comparable to the size of recycled mineral fibre materials rising from the production of insulation elements made of mineral fibres or from retreated material.

The shreds of the disintegrated composite can be sprayed onto the mineral fibre web and/or the components of the fibre web or blown up to the mineral fibre web and/or the components of the fibre web. By adding the shreds of the disintegrated composite to the mineral fibres in the collecting chamber a mineral fibre web on the conveyor can be achieved with a homogeneous structure with respect to the mineral fibres and the shreds of the disintegrated composite.

Therefore, preferably the shreds of the disintegrated composite are added in the collecting chamber to the fibres before collecting the fibres as the fibre web on the conveyor if an insulating element has to be achieved which has homogeneous properties.

To achieve an insulating element made of mineral fibres having certain properties with respect to the surfaces of the insulating element the shreds of the disintegrated composite can be added to a primary web of the fibre web in the area of a pendulum. Furthermore, the shreds of the disintegrated composite can be added to a secondary web of the fibre web for example in front of a station where the web is wound to a pipe shell. It can be seen that the shreds of the disintegrated composite can be added to a fibre web at every stage of the production process between the conveyor underneath the collecting chamber and the curing oven.

According to a further embodiment of the invention the shreds of the disintegrated composite are added in certain areas in lengthwise direction and/or cross direction of the primary web on at least one main surface of the primary web. According to this feature insulating elements with certain properties for example consistencies can be produced easily.

Furthermore, the shreds of the disintegrated composite can be mixed with a binder before adding the shreds to the fibre web and/or to the fibres in the collecting chamber. Adding a binder has the advantage, that it is much easier to fix the shreds to the fibre web. The binder is cured at the end of the process in the curing oven.

Preferably the amount of binder is adjustable with respect to the use of the product being manufactured from the fibre web.

According to a further embodiment of the method a composite, preferably in the form of boards, webs, parts of boards and/or parts of webs from the production and/or from recycling sources is used to provide particles, especially fibres containing at least aerogel particles to the collecting chamber and/or to the fibre web.

The term "aerogel" in its broader sense of "gel having air as the dispersion medium" contains each of aerogels in the narrow sense, xerogels and cryogels. As used herein the term "aerogel" denotes areogel in the broader sense of a gel having air as the dispersion medium. Preferably, the aerogel used in the present invention has been dried under supercritical conditions i.e. in "aerogel, in the narrow sense" as described above.

Finally, with respect to the method according to the invention shreds in form of flakes and/or granulated material of at least aerogel material, preferably together with mineral fibres and/or binder are added to the fibre web and/or the components of the fibre web.

The before mentioned object is furthermore achieved by an insulating element made of mineral fibres, especially stone wool fibres in form of a web, a pipe shell or a board having two main surfaces, which are connected by said faces to each other, whereby shreds of a disintegrated composite comprising aerogel material preferably together with mineral fibres and/or binder are incorporated into the web, the pipe shell or the board and/or are arranged on at least one main surface and/or one side face of the web, the pipe shell or the board.

This insulating element can be developed in that the shreds of the disintegrated composite are arranged in certain areas in lengthwise direction and/or cross direction of the web, the pipe shell or the board on at least one main surface of the web, the pipe shell or the board to achieve different products with different properties with respect to the heat and/or sound insulation and/or the mechanical strength.

Furthermore, the shreds of the disintegrated composite can be mixed with an additional binder to increase the binding forces between the shreds and the fibres of the insulating element. Preferably the shreds of the disintegrated composite are in form of flakes and/or granulated material of mineral fibres and/or areogel and/or binder.

One of the main aspects of the invention is that by disintegrate of aerogel products flakes and/or granulated material of aerogel can be achieved which can be easily incorporated into the usual process for manufacturing insulating elements made of mineral fibres. These insulating elements can therefore be easily improved with respect to their heat and sound insulation properties and their mechanical strength. Furthermore, the invention gives the opportunity to produce different insulation elements without the need of new production equipment.

Further advantages and features of the invention are described in the following with respect to the drawings. In the drawings
- Fig. 1: shows a first embodiment of a device for producing an insulating element made of mineral fibres and shreds of a disintegrated composite;
- Fig. 2: shows a second embodiment of a device for producing an insulating element made of mineral fibres and shreds of a disintegrated composite in a side view;
- Fig. 3: shows the device according to Fig. 2 in a front view and
- Fig. 4: shows a third embodiment of a device for producing an insulating element made of mineral fibres and shreds of a disintegrated composite.

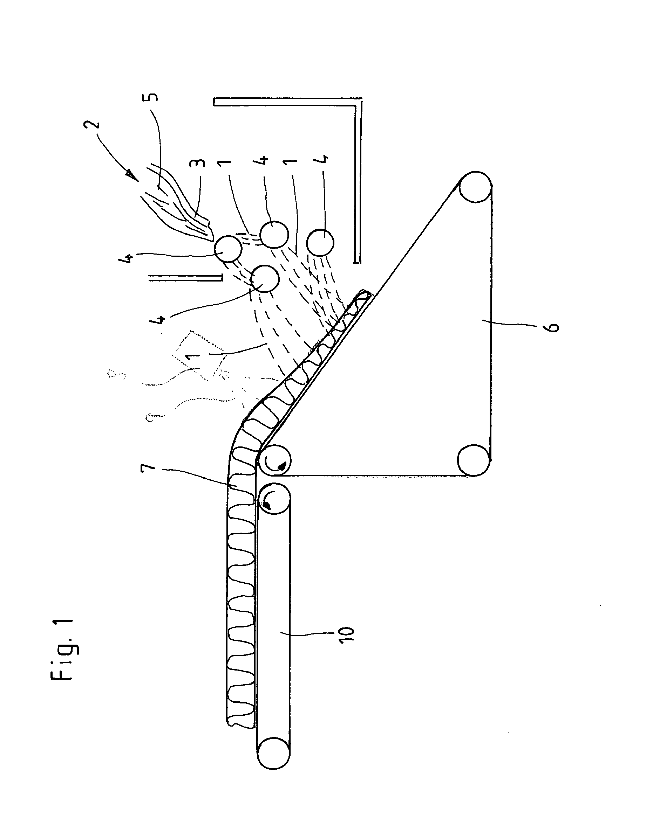

In Fig. 1 a first step of producing a mineral fibre-insulating web is disclosed. The first step inverts the formation of mineral fibres 1 from a mineral fibre forming melt 2 which is produced in a not shown furnace and which is applied from a spout 3 of the furnace to a total of four rapidly rotating spinning-wheels 4 to which the mineral fibre forming melt 2 is supplied as a mineral fibre forming melt stream 5. As the mineral fibre forming melt stream 5 is supplied to the spinning-wheels 4 in a radial direction relative thereto, a cooling gas stream is simultaneously supplied to the rapidly rotating spinning-wheels 4 in the axial direction thereof causing the formation of individual mineral fibres which are expelled or sprayed from the rapidly rotating spinning-wheels 4. The mineral fibre spray is collected on a continuously operated first conveyor belt 6 forming a primary mineral fibre-insulating web 7. A heat-hardening bonding agent is also added to the primary mineral fibre-insulating web 7 either directly to the primary mineral fibre-insulating web 7 or at the stage of expelling the mineral fibres 1 from the spinning-wheels 4, i.e. at the stage of forming the individual mineral fibres 1. A nozzle 8 is arranged in the collecting chamber to discharge shreds 9 of a disintegrated composite of at least aerogel material either into the cloud of fibres produced by the spinning-wheels 4 or on the mineral fibre web 7. Alternatively one of the spinning-wheels of the spinning-wheels 4 is provided as a nozzle 8 discharging shreds 9 of a disintegrated composite of at least aerogel material. The shreds of the disintegrated composite are sprayed on the mineral fibre web 7.

In a very simple embodiment the composite comprising aerogel is processed in a device processing recycle mineral wool, such as a hammer mill or a spike wheel.

The nozzle 8 erects across the total width of the mineral fibre web 7 and can be divided in different sections which can be activated and/or deactived separately from each other so that discharging of the shreds can be limited to parts of the mineral fibre web.

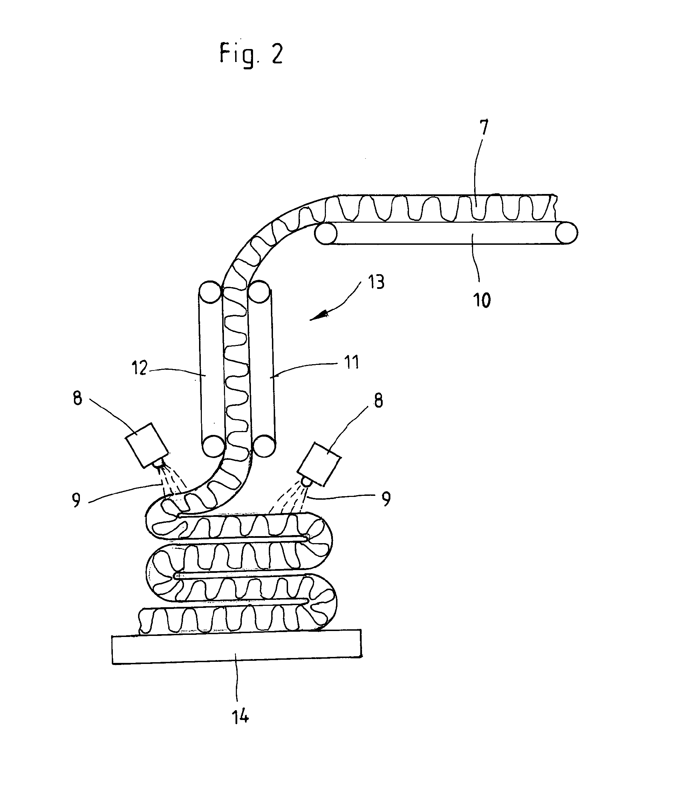

The conveyor belt 6 is followed by a second conveyor belt 10 to which the mineral fibre web is provided from the first conveyor belt 6. In Fig. 2 a part of a plant to produce an insulating element made of mineral fibres is shown. The mineral fibre web 7 is transferred from a conveyor belt which can be the conveyor belt 10 to two oppositely arranged conveyor belts 11 and 12 which serve the purpose of sandwiching the mineral fibre-insulating web 7 between opposite surfaces of the conveyor belts 11 and 12. The conveyor belts 11 and 12 are part of a pendulum 13 with which the mineral fibre web 7 is arranged in transversely overlapping relation. For this purpose pendulum 13 comprises the oppositely arranged conveyor belts 11, 12, which conveyor belts 11, 12 sandwich the input mineral fibre-insulating web 7 between oppositely arranged surfaces of the conveyor belts 11, 12 and are swung across a sloping pick-up conveyor belt 14.

As can be seen from Fig. 2 two nozzles 8 are arranged between the pendulum 13 and the conveyor belt 14. These nozzles 8 spray shreds of a disintegrated composite of at least aerogel material together with mineral fibres and binder on the surfaces of the mineral fibre web.

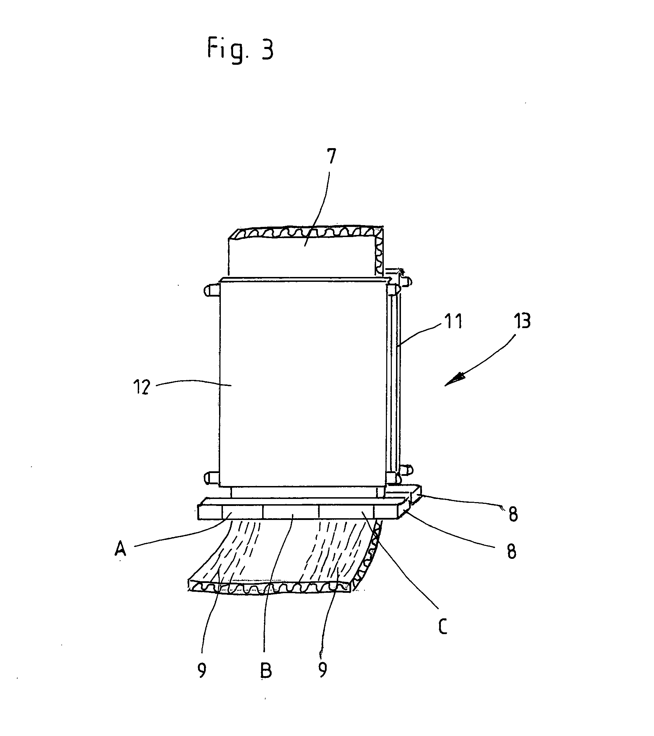

In Fig. 3 it can be seen that each nozzle is divided in sections A, B and C. Each section A, B and C can be activated or deactived with respect to areas of the mineral fibre web 7 on which the shreds should be sprayed on. In Fig. 3 only the sections A and C are activated so that shreds 9 are only arranged in the outer parts of the mineral fibre web 7.

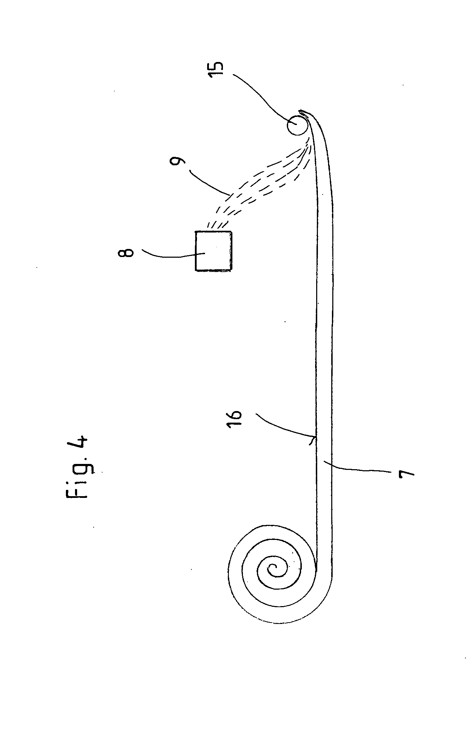

Finally Fig. 4 shows a mineral fibre web 7 ready to be wound on a winding mandrel 15. Above the mineral fibre web 7 a nozzle 8 is arranged. The nozzle 8 discharges shreds 9 according to the before mentioned description onto the surface 16 of the mineral fibre web 7 before the mineral fibre web 7 is wound around the winding mandrel. As described before the nozzle 8 in Fig. 4 can be divided in sections so that areas of the mineral fibre web 7 can be chosen on which shreds 9 should be arranged.

By shreds should be understood that the composite is torn, cut or otherwise processed to a smaller size, such as particles, shreds, fibres, tufts, flocks or the like.

### References

1 mineral fibres
2 melt
3 spout
4 spinning-wheel
5 melt stream
6 conveyor belt
7 mineral fibre web
8 nozzle
9 shred
10 conveyor belt
11 conveyor belt
12 conveyor belt
13 pendulum
14 conveyor belt
15 winding mandrel
16 surface

## Claims

1. Method for producing an insulating element made of mineral fibres, especially stone wool fibres, whereby a melt of an inorganic silicate material is fiberized to mineral fibres which are collected in a collecting chamber and deposited on a conveyor as a mineral fibre web,
**characterized in that**
adding shreds of a disintegrated composite comprising aerogel material, preferably together with mineral fibres and/or binder are added, especially sprayed on and/or blowed up to the mineral fibre web and/or the components of the fibre web.

2. Method according to claim 1, **characterized in that** the shreds of the disintegrated composite are added in the collecting chamber to the fibres before collecting the fibres as the fibre web on the conveyor.

3. Method according to claim 1, **characterized in that** the shreds of the disintegrated composite are added to a primary web of the fibre web in the area of a pendulum.

4. Method according to claim 3, **characterized in that** the shreds of the disintegrated composite are added in certain areas in lengthwise direction and/or cross direction of the primary web on at least one main surface of the primary web.

5. Method according to claim 1, **characterized in that** the shreds of the disintegrated composite are mixed with a binder before adding the particles to the fibre web and/or to the fibres in the collecting chamber.

6. Method according to claim 5, **characterized in that** the amount of binder is adjustable with respect to the use of the product being manufactured from the fibre web.

7. Method according to claim 1, **characterized in that** a composite, preferably in the form of boards, webs, parts of boards and/or parts of webs from the production and/or from recycling sources is used to provide particles, especially fibres containing at least aerogel particles to the collecting chamber and/or to the fibre web.

8. Method according to claim 1, **characterized in that** shreds in form of flakes and/or granulated material of at least aerogel material, preferably together with mineral fibres and/or binder are added to the fibre web and/or the components of the fibre web.

9. Insulating element made of mineral fibres, especially stone wool fibres in form of a web, a pipe shell or a board having two main surfaces, which are connected by side faces to each other, **characterized in that** shreds of a disintegrated composite of comprising aerogel material, preferably together with mineral fibres and/or binder are incorporated into the web, the pipe shell or the board and/or are arranged on at least one main surface and/or one side face of the web, the pipe shell or the board.

10. Insulating element according to claim 9, **characterized in that** the shreds of the disintegrated composite are arranged in certain areas in lengthwise direction and/or cross direction of the web, the pipe shell or the board on at least one main surfaces of the web, the pipe shell or the board.

11. Insulating element according to claim 9, **characterized in that** the shreds of the disintegrated composite are mixed with an additional binder.

12. lnsulating element according to claim 9, **characterized in that** the shreds of the disintegrated composite are in form of flakes and/or granulated material of mineral fibres and/or aerogel and/or binder.
